# EUROPÄISCHE PATENTANMELDUNG

(11) **EP 1 577 593 A1**
(43) Veröffentlichungstag der Anmeldung: **21.09.2005**
(21) Anmeldenummer: 05003220.0
(22) Anmeldetag: 16.02.2005
(51) Int. Cl.: F16K 11/07, F16K 39/04

(54) **Ventil**

(30) Priorität: 16.03.2004 DE 102004012709
(71) Anmelder: HYDAC Electronic GmbH, 66280 Sulzbach/Saar (DE)
(72) Erfinder: Kattler, Frank, 66346 Püttlingen (DE); Casimir, Michael, 66128 Saarbrücken (DE)
(74) Vertreter: Bartels & Partner

(57) **Zusammenfassung**

2. Die Erfindung betrifft ein Ventil mit einem Ventilgehäuse (10) und einem darin axial verfahrbar geführten Ventilkolben (12), wobei zum Herstellen einer fluidführenden Verbindung in mindestens einer radialen Ebene (16) im Ventilgehäuse (10) mindestens ein Durchlaß (18) vorhanden ist, der mit mindestens einer Ausnehmung (22) im Ventilkolben (12) zur Deckung bringbar ist. Dadurch, dass axial in dieser radialen Ebene (16) oder zu dieser versetzt ein weiterer Durchlaß (40) vorhanden ist und dass der jeweils weitere Durchlaß (40), der mit der oder einer weiteren Ausnehmung (22) im Ventilkolben (12) zusammenwirkt, bezogen auf seine jeweilige freie Querschnittsfläche kleiner bemessen ist als der andere Durchlaß (18), ist wie im Stand der Technik erreicht, dass im geöffneten Zustand der resultierende Strömungswinkel 90° ist und die axiale Strömungskraft, die am Ventilkolben wirkt, zu Null wird, wobei jedoch beim Schließen des Ventils der Ventilkolben zunächst den Durchlaß mit der größeren freien Querschnittsfläche verschließt, wohingegen der weitere und versetzt angeordnete Durchlaß kleinerer Querschnittsfläche noch in seiner voll- oder teilgeöffneten Stellung verbleibt.

## Beschreibung

Die Erfindung betrifft ein Ventil mit einem Ventilgehäuse und einem darin axial verfahrbar geführten Ventilkolben, wobei zum Herstellen einer fluidführenden Verbindung in mindestens einer radialen Ebene im Ventilgehäuse mindestens ein Durchlaß vorhanden ist, der mit mindestens einer Ausnehmung im Ventilkolben zur Deckung bringbar ist.

Dahingehend bekannte hydraulische Ventile werden überwiegend in Kolben-Längsschieber-Bauart ausgeführt, wobei auf den Ventilkolben eines Ventils, das als Druck-, Strom-, Wege- und Servoventil ausgebildet ist, im Betrieb strömungsbedingt Radial- und Axialkräfte einwirken, die einen erheblichen Einfluß auf die Schalt- und Stellkraft und damit auf das statische und dynamische Betriebsverhalten der genannten Ventile haben. Besondere Bedeutung kommt dabei der Strahlkraft zu, also derjenigen Kraft, die der Flüssigkeitsstrahl beim Auftreffen auf den Ventilkolben verursacht. Durch die Ablenkung an der jeweiligen Steuerkante des Ventilkolbens trifft ein dahingehender Fluidstrahl unter einem vorgebbaren Winkel auf den Ventilkolben. Dabei entsteht die in Strömungsrichtung wirkende Strahlkraft, deren Normalkomponente am gesamten Umfang radial auf den Kolben einwirkt. Ihre Resultierende wird damit zu Null. Die Tangentialkomponente der dahingehenden Strahlkraft wirkt bezogen auf den Steuerspalt in Schließrichtung mit der Folge, dass hierdurch das Schaltverhalten des Ventils negativ beeinflußt ist und insbesondere exakte Schaltvorgänge beeinträchtigt.

Im Stand der Technik sind zwar schon Anstrengungen unternommen worden, die genannte resultierende Strahlkraft zu beeinflussen, um den dahingehenden negativen Effekten entgegenzuwirken; allein diese bekannten Maßnahmen führen häufig nicht zu den gewünschten Erfolgen und sind teuer und aufwendig in der Realisierung. Beispielsweise besteht die Möglichkeit, eine sinnfällige Strahlkraftumlenkung durch Kolbengestaltung vorzunehmen, beispielsweise indem man die Ausnehmung im Ventilkolben als Paraboloid gestaltet oder indem man den relevanten Ablenkwinkel durch Gestaltung der Steuerkante beeinflußt, unter anderem in Form von im Querschnitt dreieckförmigen Hinterschnittgestaltungen im Ventilkolben.

Ausgehend von diesem Stand der Technik liegt der Erfindung die Aufgabe zugrunde, unter Beibehaltung der Vorteile, insbesondere im Hinblick auf eine günstige Beeinflussung der resultierenden Strahlkraft, die bekannten Ventillösungen dahingehend weiter zu verbessern, dass sich auf funktionssichere Art und Weise die axial wirkende resultierende Strahlkraft reduzieren läßt, um dergestalt nachteilige Zuzieheffekte für den Ventilkolben auszuschließen. Ferner sollen mit der erfindungsgemäßen Ventilkonzeption die Möglichkeiten einer Volumenstromansteuerung erhöht werden. Eine dahingehende Aufgabe löst ein Ventil mit den Merkmalen des Patentanspruches 1 in seiner Gesamtheit.

Dadurch, dass gemäß dem kennzeichnenden Teil des Patentanspruches 1 axial in dieser radialen Ebene oder zu dieser versetzt ein weiterer Durchlaß vorhanden ist und dass der jeweils weitere Durchlaß, der mit der oder einer weiteren Ausnehmung im Ventilkolben zusammenwirkt, bezogen auf seine freie Querschnittsfläche kleiner bemessen ist als der andere Durchlaß, ist, wie im Stand der Technik erreicht, dass im geöffneten Zustand der resultierende Strömungswinkel 90° ist und die axiale Strömungskraft, die am Ventilkolben wirkt, zu Null wird, wobei jedoch beim Schließen des Ventils der Ventilkolben zunächst den Durchlaß mit der größeren freien Querschnittsfläche verschließt, wohingegen der weitere und versetzt angeordnete Durchlaß kleinerer Querschnittsfläche noch in seiner voll- oder teilgeöffneten Stellung verbleibt. Während der Strömungswinkel der großen Durchlaßstelle somit schon kleiner als 90° ist, verbleibt der Strömungswinkel für den kleineren Durchlaß noch bei 90° und der resultierende Strömungswinkel der beiden Durchlässe ist kleiner als bei einer bekannten Ausführung des Ventils mit Durchlässen in einer Radialebene, die darüber hinaus ein und dieselbe freie Querschnittsfläche aufweisen. Hierdurch läßt sich die Summe der axialen Strömungskräfte deutlich reduzieren, und zwar auf kostengünstige und funktionssichere Art und Weise, da die in Rede stehenden Durchlässe sich konstruktiv einfach in das Ventilgehäuse einbringen lassen und schwer zu beherrschende konstruktive Umbauten am Ventilkolben, wie Parabel- oder Hinterschnittgestaltung, sind vermieden. Der vorstehend beschriebene Effekt stellt sich in entsprechend verminderter Form auch dann ein, wenn der Versatz der Durchlässe derart ist, dass nicht nur der Durchlaß mit größerer Querschnittsfläche durch den Ventilkolben bereits teilweise verschlossen ist, sondern auch der Durchlaß mit der kleineren Querschnittsfläche. Insoweit wäre dann auch der Strömungswinkel für den kleineren Durchlaß kleiner als 90°.

Des weiteren besteht eine Vielzahl an Möglichkeiten, in Abhängigkeit des Versatzes der Radialebenen, der geometrischen Gestaltung der Durchlässe, deren Anzahl und Bemessung ihrer freien Querschnittsflächen im weiten Rahmen und in Abhängigkeit der geforderten Schaltaufgabe den jeweiligen Volumenstrom an das Öffnungsverhalten des Ventils anzupassen. Neben linearen Kurvenverläufen lassen sich dergestalt auch progressive und degressive Volumenstromanpassungen erreichen sowie entsprechende Wechselübergänge zwischen einem progressiven und einem degressiven Öffnungsverhalten. Neben der genannten Strömungskraft-Minimierung durch die weiteren Durchlässe, die in der Art einer Vorsteuerbohrung wirken, läßt sich also auch die Volumenstromkennlinie segmentieren und durch das Einbringen einer weiteren dritten Art an im Querschnitt weiter reduzierten Durchlässen im Ventilgehäuse ist es möglich, die Federsteifigkeit bei einem Ventil, insbesondere Wegeschieberventil, zu reduzieren.

Weitere vorteilhafte Ausführungsformen des erfindungsgemäßen Ventils sind Gegenstand der sonstigen Unteransprüche.

Im folgenden wird das erfindungsgemäße Ventil anhand verschiedener Ausführungsformen nach der Zeichnung näher erläutert. Dabei zeigen in prinzipieller und nicht maßstäblicher Art die
- Fig. 1a,b: im Längsschnitt Teile eines bekannten Wegeventils;
- Fig. 2a,b: entsprechend zu den Darstellungen nach den Fig. 1 a,b die erfindungsgemäß modifizierte Lösung;
- Fig. 3a,b: eine erste Ausführungsform für das erfindungsgemäße Ventilkonzept nach den Fig. 2a,b;

- Fig. 4: in der Art eines Kennlinienfeldes die Volumenstromvarianten für das Ventil nach den Fig.3a,b;
- Fig. 5a,b: eine weitere Ausführungsform eines Ventils nach der Erfindung.

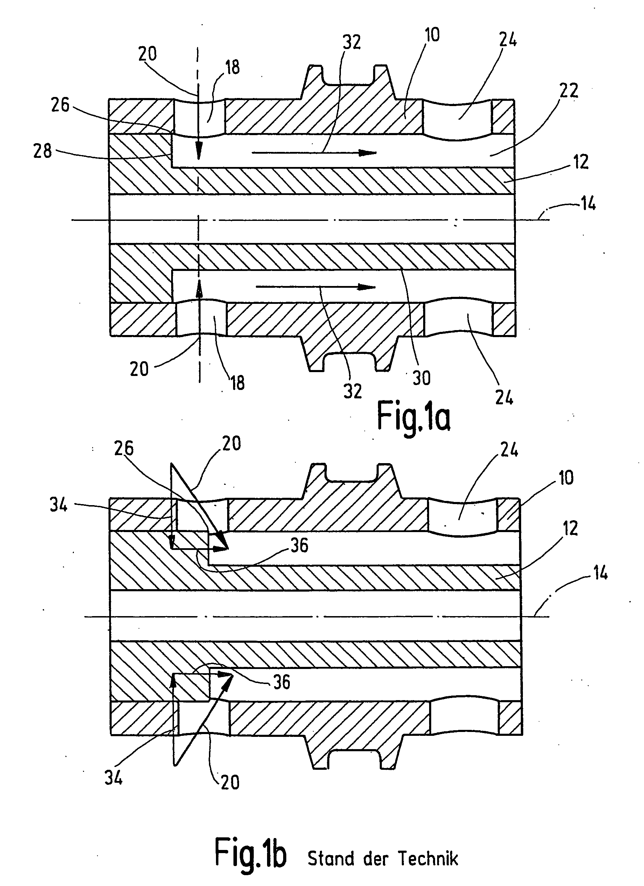

Das in den Fig. 1 a, 1 b zum Stand der Technik gezeigte Ventil, insbesondere in der Art eines Wege-Schieverventils, ist nur insoweit dargestellt, als es zur Erläuterung der erfindungsgemäßen Effekte notwendig ist. Das bekannte Ventil weist ein Ventilgehäuse 10 auf mit einem darin angeordneten, axial verfahrbar geführten Ventilkolben 12, wobei die Verfahrrichtung parallel zur Längsachse 14 des Ventils erfolgt. Zum Herstellen einer fluidführenden Verbindung sind in einer radialen Ebene 16 im Ventilgehäuse 10 zwei Durchlässe 18 vorhanden in Form zweier diametral zur Längsachse 14 gegenüberliegenden Bohrungen großer Querschnittsfläche. Die mögliche Einströmrichtung des Fluids ist mit Pfeilen 20 wiedergegeben.

Der dahingehende Durchlaß ist in Abhängigkeit von der Verschiebestellung des Ventilkolbens 12 mit einer Ausnehmung 22 im Ventilkolben 12 zur Deckung bringbar, wobei die Ausnehmung 22 durch eine entsprechende Reduzierung des Durchmessers des Ventilkolbens 12 gebildet ist. Der Ventilkolben 12 kann massiv ausgebildet sein oder gemäß den Darstellungen nach den Fig.1a,1b einen Mittenkanal entlang der Längsachse 14 aufweisen. Um den Fluidstrom an einen hydraulischen Verbraucher weiterleiten zu können, weist darüber hinaus das Ventilgehäuse eine Durchlaßstelle 24 auf; gleichfalls realisiert durch zwei zur Längsachse 14 diametral einander gegenüberliegende Bohrungen mit gegenüber den Bohrungen als Durchlässe 18 noch vergrößerter Querschnittsfläche. Neben den gezeigten beiden Bohrungen eines jeden Durchlasses 18,24 können diese auch noch über weitere, nicht dargestellte Bohrungen als jeweilige Durchlaßstelle in einer jeden Radialebene verfügen.

Benachbart zu der Ausnehmung 22 ist der Ventilkolben 12 außenumfangsseitig verbreitert und an der Stelle des Übergangs von der genannten Verbreiterung zu der Ausnehmung 22 weist der Ventilkolben 12 eine kreisringförmige Steuerkante 26 auf. Die ringförmige Steuerkante 26 ist Teil einer Ringfläche 28, an der sich im rechten Winkel der zylindrische Boden 30 der nutförmigen Ausnehmung 22 anschließt. Insoweit verlaufen Ringfläche 28 und Boden 30 in einem rechten Winkel zueinander, wobei der dahingehende Übergang auch durch eine Anphasung oder eine bogenförmige Überleitungsstelle gebildet sein kann.

Bei der Schaltstellung nach der Fig. 1a ist die Ausnehmung 22 des Ventilkolbens 12 in vollständig fluidführender Deckung mit dem jeweiligen Durchlaß 18 im Ventilgehäuse 10. Bei dieser vollständig geöffneten Situation ist der Strömungswinkel 90°, d.h. das mit Pfeil 20 gekennzeichnete einströmende Fluid trifft senkrecht auf den Boden 30 des Ventilkolbens 12 auf und wird von der Ringfläche 28 um 90° in Pfeilrichtung 32 zwecks Ausströmen aus der Durchlaßstelle 24 umgelenkt. Der dahingehende Strömungsvertauf ist modellhaft wiedergegeben und soll mithin nur in groben Zügen hier die Strömungsverhältnisse innerhalb des Ventils verdeutlichen.

Bewegt sich nun in Blickrichtung auf die Fig. 1a,1b gesehen der Ventilkolben 12 von seiner in Blickrichtung auf die Fig.1a linken Schaltstellung in Richtung einer hiervon rechten Schaltstellung nach der Fig. 1b, verschließt die Steuerkante 26 die freie Querschnittsfläche des jeweiligen Durchlasses 18 und der Fluidstrom wird gemäß der Pfeildarstellung 20 in einem schrägen Bahnverlauf umgelenkt. Bei der gezeigten Schaltstellung trifft mithin der Fluidstrom etwa in einem Winkel von 45° auf den parallel zur Längsachse 14 verlaufenden Boden 30 des Ventilkolbens 12 auf. Mit zusehends verschlossenem jeweiligen Durchlaß 18 wird mithin der Strömungswinkel für den Fluidstrom 20 flacher, wodurch ein immer größer werdender axialer Kraftanteil entsteht, der unter Berücksichtigung des gezeigten Kräftedreiecks 34 eine Komponente 36 aufweist, die die Tendenz hat, den Ventilkolben 12 in Blickrichtung auf die Fig. 1 b gesehen weiter nach rechts zu verschieben, so dass insoweit unter Verringerung der freien Querschnittsfläche des jeweiligen Durchlasses 18 das Ventil "zugezogen" wird. Da in dem dahingehenden axialen Kraftanteil (Komponente 36 parallel zur Längsachse 14), die man auch als Strahlkraft bezeichnet, das Produkt aus Volumenstrom und Strömungsgeschwindigkeit des Fluids mit eingeht, wirkt die Strahlkraft auch bei Umkehr der Strömungsrichtung stets in die gleiche Richtung auf den Ventilkolben 12, d.h. strömt das Fluid von der Ausnehmung 22 im Ventilkolben 12 zurück zum jeweiligen Durchlaß 18, wird gleichfalls der Ventilkolben 12 in Blickrichtung auf die Fig.1a,1b gesehen, wie bereits beschrieben, von links nach rechts in der Art der "zugezogenen" Stellung bewegt, bei der die Tendenz besteht, die freie Querschnittsfläche der Bohrungen der Durchlässe 18 zu reduzieren. Der dahingehend beschriebene Effekt der tangentialen Strahlkraft ist für die Beherrschung der Fluidströme und für eine sichere Ansteuerung des Ventils mit definierten Kräften, beispielsweise aufgebracht durch einen Betätigungsmagneten, schädlich.

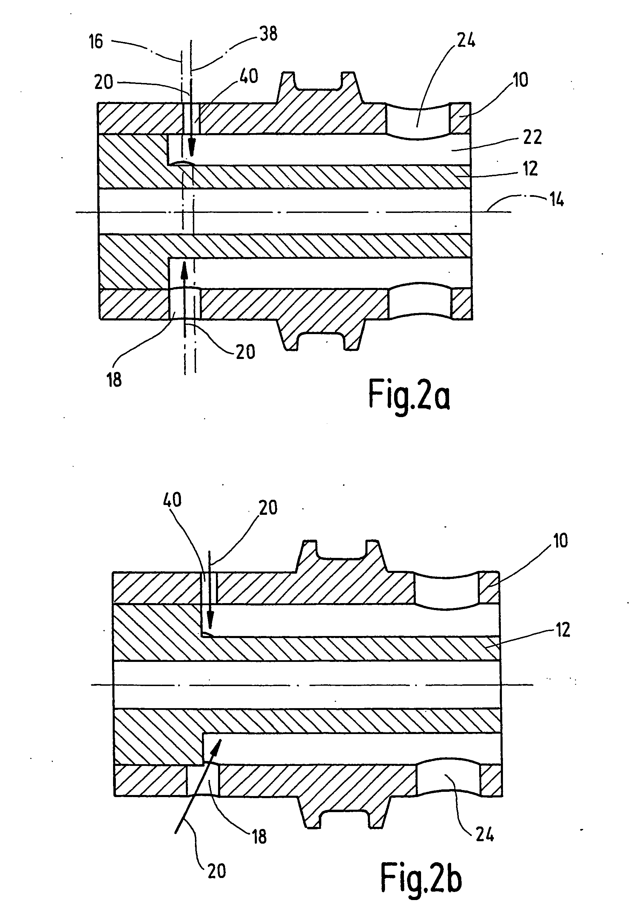

Die Darstellung nach der Fig. 2a,b zeigt nun, wie bei dem erfindungsgemäßen Ventil der dahingehend schädliche Strahlkraftanteil mit seiner axialen Kraftkomponente reduziert werden kann. Dabei werden für die erfindungsgemäße Ventilausführung dieselben Bezugszeichen wie nach den Fig. 1a,1b eingesetzt, sofern es sich hier um dieselben Baukomponenten handelt. Das bisher zu diesen Baukomponenten Ausgeführte gilt dann auch für das erfindungsgemäße Ventil nach den Fig. 2ff.

Der wesentliche Unterschied zu der bekannten Lösung besteht bei dem erfindungsgemäßen Ventil darin, dass axial zu der radialen Ebene 16 versetzt eine weitere Radialebene 38 vorhanden ist mit weiteren Durchlässen 40 in Form von Bohrungen mit reduzierter, freier Querschnittsfläche. Der angesprochene Versatz zwischen den beiden Radialebenen 16,38 und mithin zwischen den Durchlässen 18 und 40 ist jedenfalls so ausgeführt, dass bezogen auf die Ausnehmung 22 im Ventilkolben 12 es eine Überschneidung gibt, wobei jedenfalls bei zufahrendem Ventilkolben 12 zum Verschließen des jeweiligen Durchlasses 18 dieser bereits teilweise verschlossen ist; die weiteren Durchlaßstellen 40 hingegen noch nicht (vgl. Verschiebeposition nach der Fig.2b). Insoweit besteht also eine Überdeckung im einander angrenzenden Randbereich von jeweiligem Durchlaß 18 mit zuordenbarem Durchlaß 40. Ist der dahingehende Versatz größer, würden insbesondere die beiden Radialebenen 16 und 38 derart weit in axialer Richtung voneinander beabstandet sein, dass der jeweilige Durchlaß 18 bereits vollständig geschlossen ist, bevor eine Schließung des weiteren jeweiligen Durchlasses 40 erfolgt, würde sich die nachfolgend näher beschriebene Kräftekompensation aber nicht einstellen.

Bei der erfindungsgemäßen Ventillösung ist der gleiche Strömungsquerschnitt durch die Kombination zweier symmetrischer Bohrungsreihen unterschiedlichen Durchmessers realisiert, d.h. die freien Querschnittsflächen von Durchlässen 18 und 40 entsprechen gemeinsam der freien Querschnittsfläche des jeweiligen Durchlasses 18 bei dem Ventil im Stand der Technik nach den Fig. 1a,1b. Die Fig.2a, die den voll geöffneten Zustand wiedergibt, entspricht von der Betriebssituation her der Darstellung nach der Fig. 1a und insoweit ist in beiden Fällen der resultierende Strömungswinkel, wie bereits erläutert, 90° und somit die axiale Strömungs- oder Tangentialkraft Null. Beim Schließen des Ventils, also bei einer Verfahrbewegung des Ventilkolbens 12 aus seiner Stellung nach der Fig.2a in Blickrichtung auf die Fig. 2b gesehen nach rechts wird in Blickrichtung auf die Fig. 2b gesehen die untere größere Bohrung und mithin der Durchlaß 18 verschlossen, wohingegen die oben liegende kleinere Bohrung als Durchlaß 40 noch voll geöffnet ist. Während der Strömungswinkel der großen Bohrung somit schon kleiner als 90° ist, bleibt der Winkel der kleinen Bohrung noch bei 90°. Der hieraus resultierende Strömungswinkel der beiden Bohrungsreihen ist dann kleiner als bei der Ausführung des Ventils mit nur einer Bohrungsreihe gemäß der Darstellung nach den Fig.1a,b, wodurch in Summe die axialen Strömungs- bzw. Tangentialkräfte gegenüber der Lösung im Stand der Technik reduziert sind, was zu einer Kompensation der beschriebenen nachteiligen Ventileffekte führt.

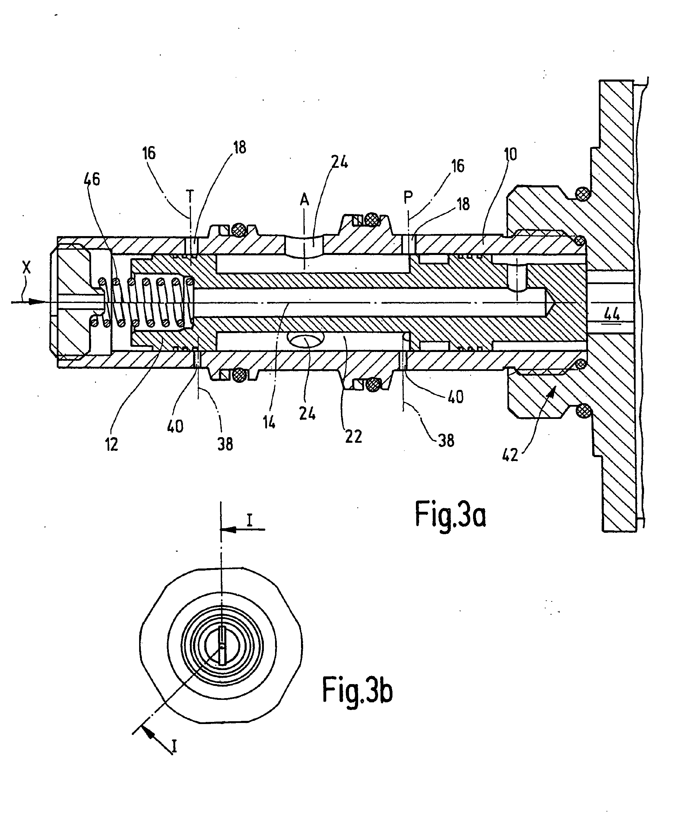

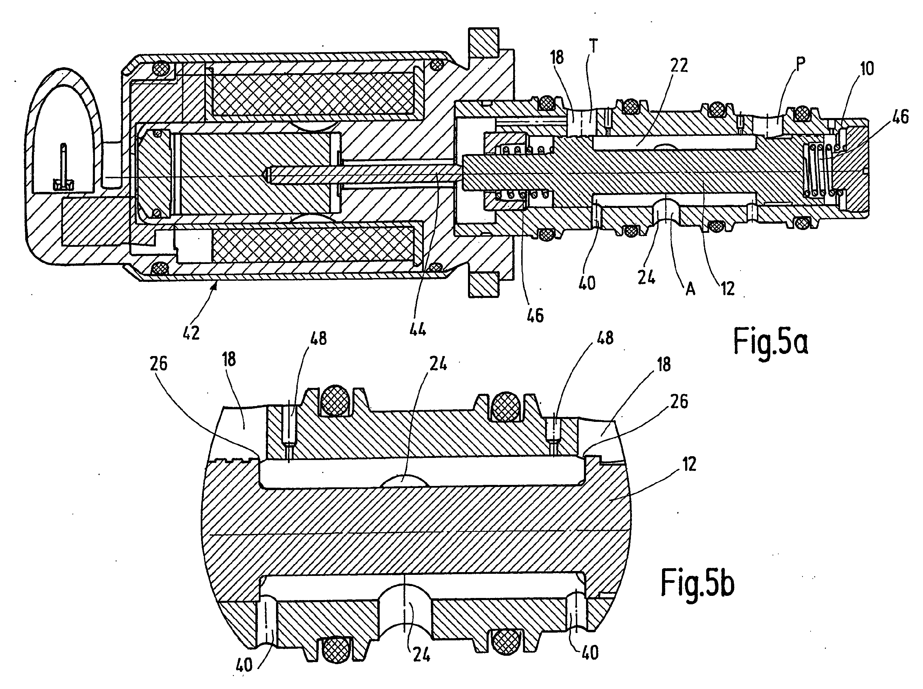

Im folgenden wird nunmehr das erfindungsgemäße Ventilkonzept nach den Fig. 2a,b anhand zweier Ausführungsbeispiele und Ventilkonstruktionen nach den Fig. 3a,b bzw. 5a,b näher erläutert.

Die Fig.3b zeigt in Blickrichtung des Pfeils X nach der Fig: 3a das erfindungsgemäße Ventil und die Längsschnittdarstellung nach der Fig.3a entspricht der Schnittlinie I - I in Fig.3b. Des weiteren werden im Nachfolgenden wieder dieselben Bezugszeichen verwendet, sofern dieselben Baukomponenten, wie bereits erläutert, angesprochen sind.

Die Ventilanordnung nach den Fig.2a,b findet man in Blickrichtung auf die Fig.3a gesehen auf der linken Bildseite wieder und dieselbe Anordnung ist gegenüber dem Nutzanschluß A liegend auf der rechten Seite wiederzufinden, wobei die beiden versetzt zueinander angeordneten Radialebenen 38 zueinander benachbart liegen und die beiden Radialebenen 16 mit den Durchlässen 18 voneinander abgewandt. Die in der Fig.3a angegebene Anschlußbelegung sieht für P den Pumpenanschluß, für A den Nutzanschluß und für T den Tankanschluß vor. Die Verfahrbewegung des Ventilkolbens 12 mit seiner Ausnehmung 22 erfolgt über einen Betätigungsmagneten 42, der in der Fig. 3a nur teilweise wiedergegeben ist und insbesondere in der Art eines Proportionalmagnetventils ausgestaltet ist. Die Schaltansteuerung über den Betätigungsmagneten 42 erfolgt mittels eines stangenartigen Betätigungsteils 44 gegen die Wirkung eines Kraftspeichers in Form einer Druckfeder 46 am gegenüberliegenden Ende des Ventilkolbens 12. Die dahingehende Ansteueranordnung ist bei Wegeschieberventilen üblich, so dass an dieser Stelle hierauf nicht mehr näher eingegangen wird.

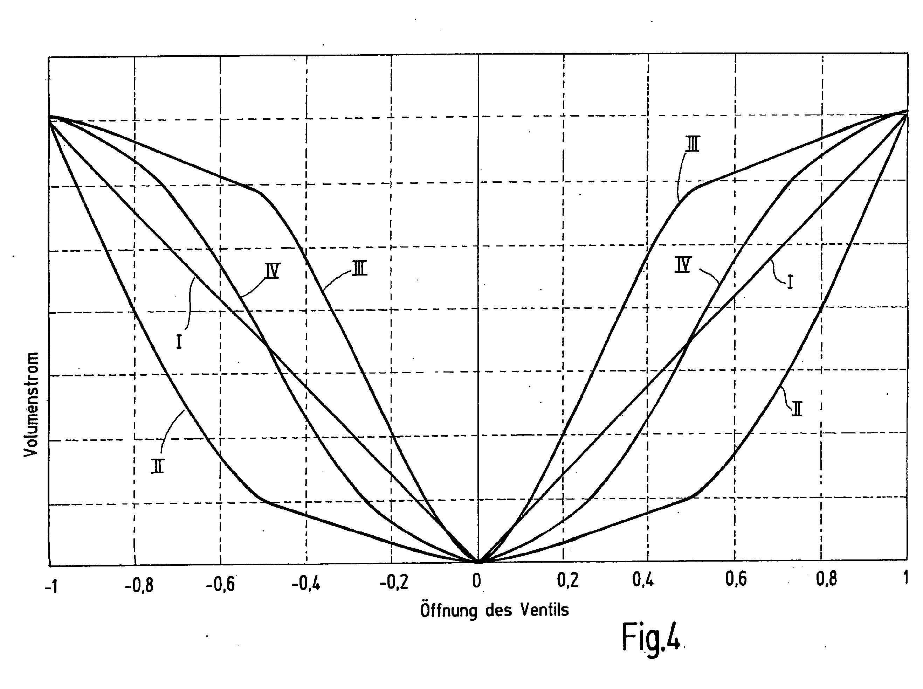

Mit der Ventilanordnung nach der Fig. 3a lassen sich die segmentierten Kennlinienverläufe nach der Fig.4 erreichen und berücksichtigend, dass der versetzte Bohrungsverlauf sowohl für den Pumpenanschluß P als auch für den Tankanschluß T realisiert ist, ergibt sich beidseitig einer Null-Öffnungsstellung für das Ventil in beiden Verschieberichtungen des Ventilkolbens 12 der segmentierte Volumenstromverlauf. Die in der Fig. 4 mit I bezeichnete Gerade läßt sich dann erreichen, wenn die Durchlässe 18,40 sowohl auf der Pumpenanschlußseite als auch auf der Tankanschlußseite aus Schlitzen (nicht dargestellt) gebildet sind und nicht aus Bohrungen, wie dargestellt, wobei die Schlitzausnehmungen im Ventilgehäuse 10 entsprechend kostenintensiv in der Herstellung sind. Der zunächst degressiv und dann progressiv verlaufende Volumenstrom nach der Kennlinie II läßt sich beispielsweise dann erreichen, wenn pro Seite P oder T zwei kleine Bohrungen mit einem Durchmesser von 0,6 mm und sechs große Bohrungen mit einem Durchmesser von 1,4 mm eingesetzt sind, wobei die kleineren Bohrungen der Durchlässe 40 aufeinander zugewandt und mithin benachbart um jeweils 0,5 mm von dem jeweils zuordenbaren Durchlaß 18 versetzt im Ventilgehäuse 10 angeordnet sind. Auch insoweit ist aber eine Überdeckung im zuordenbaren Radialsegment, wie bereits erläutert, zwischen den Durchlässen 18 und 40 einer Seite mit der Ausnehmung 22 des Ventilkolbens 12 notwendig.

Bei der mit III bezeichneten Kennlinie, die zunächst linear ansteigt und dann in einen degressiven Volumenstrom übergeht bei zusehender Öffnung des Ventils aus der mittleren Null-Stellung heraus, werden vierzehn kleine Bohrungen mit einem Durchmesser von 0,5 mm für den jeweiligen Durchlaß 40 eingesetzt und zwei große Bohrungen mit einem Durchmesser von 0,7 mm für den jeweiligen Durchlaß 18 mit größerer Querschnittsfläche bezogen auf die Einzelbohrung. Hier ist der Versatz in derselben Richtung, wie vorstehend beschrieben, 0,3 mm zwischen den Radialebenen 16 und 38. Bei der mit IV bezeichneten Kennlinie ist der Verlauf zunächst von Null ausgehend progressiv und geht dann in einen degressiven Verlauf über mit zunehmender Öffnung des Ventils in beiden Richtungen. Hierbei werden in derselben Radialebene, also nicht versetzt, sechs kleine Bohrungen mit einem Durchmesser von 0,5 mm als Durchlässe 40 eingesetzt und drei große Bohrungen mit einem Durchmesser von 1 mm für den jeweiligen Durchlaß 18. Im dahingehenden Fall sind die beiden ansonsten versetzt zueinander angeordneten radialen Ebenen 16 und 38 in einer gemeinsamen Ebene (nicht dargestellt) verlaufend angeordnet. Die dahingehenden Ausführungen machen deutlich, dass es zum einen auf den Versatz der beiden Radialebenen 16,38 ebenso ankommt wie auf die Durchmesserverhältnisse und mithin die freien Querschnittsflächen einer jeden Bohrung als Durchlaß 18 bzw. 40.

Das zweite Ausführungsbeispiel des erfindungsgemäßen Ventils nach den Fig. 5a und 5b wird nur noch insoweit erläutert, als es sich wesentlich von dem vorangegangenen Ausführungsbeispiel unterscheidet, wobei wiederum dieselben Bauteile mit denselben Bezugszeichen versehen werden, sofern sie einander entsprechen. Ferner gibt die Fig. 5b vergrößert einen Bildausschnitt nach der Fig.5a wieder.

Die Fig.5a,5b zeigen den Ventilkolben 12 in seiner Mittelstellung. Für den Erhalt der dahingehenden Mittelstellung ist der Betätigungsmagnet 42 zu bestromen und über das Betätigungsteil 44 wird in Blickrichtung auf die Fig.5a gesehen unter der Wirkung der linken Druckfeder 46 der Ventilkolben 12 entgegen der Wirkung der rechten Druckfeder 46 in der gezeigten Mittellage gehalten. In der dahingehenden Mittellage ist die Ausnehmung 22 von der Radialebene des Anschlusses A ausgesehen in Blickrichtung auf die Fig. 5 gesehen weiter nach rechts verschoben, so dass in gleichen Ebenen eine Überdeckung der Durchlässe 18,40 erfolgt für beide Anschlüsse P,T. Zwischen den Durchlässen 40 auf beiden Seiten P,T sind jeweils in Richtung des Nutzanschlusses A weitere Durchlässe 48 einer dritten Art eingebracht, die mit einer Drosselstelle versehen sind. Diese dritte Art an Durchlässen 48 liegt außerhalb des Überdeckungsbereichs der Steuerkante 26 des Ventilkolbens 12 mit dem jeweils zuordenbaren Durchlaß 40 kleineren Querschnitts. Insoweit ist der freie Querschnitt des jeweiligen Durchlasses 48 gegenüber dem freien Querschnitt des jeweiligen Durchlasses 40 auch im Hinblick auf die Drosselstelle entsprechend verringert. Mit der dahingehenden Anordnung läßt sich nicht nur eine Strömungskraft-Minimierung für das Ventil erreichen über Vorsteuerbohrungen, sondern vielmehr läßt sich auch dergestalt die Federvorspannung sinnfällig kompensieren.

Die obigen Ausführungen machen deutlich, dass durch Versatz von Durchlässen mit unterschiedlich freien Querschnittsflächen bei gleichzeitiger Überdeckung mit der fluidführenden Verbindung innerhalb des Ventilkolbens 12 sich eine Vielzahl von Vorteilen realisieren läßt, wie Strömungskraft-Minimierung, Kompensation der Federvorspannung und/oder Vorgabe von Ventil-Schaltkennlinien nach einsatzspezifischen Belangen. Ferner ist die dahingehende Lösung funktionssicher und kostengünstig in der Realisierung. Die vorstehend beschriebenen Effekte stellen sich auch dann ein, wenn der Ventilkolben 12 nicht nur den größeren Durchlaß bereits teilweise verschlossen hat, sondern auch den Durchlaß mit geringerer Querschnittsfläche. Im dahingehenden Fall ist der Strömungswinkel für den kleineren Durchlaß gleichfalls kleiner 90°.

## Patentansprüche

1. Ventil mit einem Ventilgehäuse (10) und einem darin axial verfahrbar geführten Ventilkolben (12), wobei zum Herstellen einer fluidführenden Verbindung (P,T,A) in mindestens einer radialen Ebene (16) im Ventilgehäuse (10) mindestens ein Durchlaß (18) vorhanden ist, der mit mindestens einer Ausnehmung (22) im Ventilkolben (12) zur Deckung bringbar ist, **dadurch gekennzeichnet, dass** axial in dieser radialen Ebene (16) oder zu dieser versetzt ein weiterer Durchlaß (40) vorhanden ist und dass der jeweils weitere Durchlaß (40), der mit der oder einer weiteren Ausnehmung (22) im Ventilkolben (12) zusammenwirkt, bezogen auf seine jeweilige freie Querschnittsfläche kleiner bemessen ist als der andere Durchlaß (18).

2. Ventil nach Anspruch 1, **dadurch gekennzeichnet, dass** die jeweiligen Durchlässe (18,40,48) aus Schlitzen mit unterschiedlichen Schlitzweiten und/oder aus Bohrungen mit unterschiedlichen Bohrungsdurchmessern als jeweils freie Querschnittsfläche gebildet sind.

3. Ventil nach Anspruch 1 oder 2, **dadurch gekennzeichnet, dass** in der jeweiligen Verfahrrichtung des Ventilkolbens (12) mindestens ein Durchlaß (18,40,48) mit kleiner freier Querschnittsfläche hinter einem vorangehenden Durchlaß mit größerer freier Querschnittsfläche angeordnet ist.

4. Ventil nach einem der Ansprüche 1 bis 3, **dadurch gekennzeichnet, dass** in der jeweiligen radialen Ebene (16,38) entlang einer Umfangslinie segmentartig die Durchlässe (18,40,48) einer Größe in einer Gruppe zusammengefaßt sind.

5. Ventil nach Anspruch 4, **dadurch gekennzeichnet, dass** die jeweilige Gruppe an Durchlässen (18,40,48) eines Segmentes gleich oder ünterschiedlich ist zu der Anzahl an Durchlässen eines anderen Segmentes.

6. Ventil nach einem der Ansprüche 1 bis 5, **dadurch gekennzeichnet, dass** die in verschiedenen radialen Ebenen (16,38) angeordneten Durchlässe (40,48) mit kleiner freier Querschnittsfläche einander zugewandt in dem Ventilgehäuse (10) angeordnet sind und die Durchlässe (18) mit demgegenüber größerer freier Querschnittsfläche voneinander abgewandt sind.

7. Ventil nach Anspruch 6, **dadurch gekennzeichnet, dass** zwischen den einander zugewandten Radialebenen (38) mit Durchlässen (40) kleiner Querschnittsfläche mindestens ein weiterer Durchlaß (48) vorzugsweise mit noch kleinerer Querschnittsfläche, insbesondere in der Art einer Drossel, im Ventilgehäuse (10) angeordnet ist.

8. Ventil nach einem der Ansprüche 1 bis 7, **dadurch gekennzeichnet, dass** die jeweilige Ausnehmung (22) aus einer Umfangsreduzierung im Ventilkolben (12) gebildet ist, dessen axiale Länge jedenfalls kleiner ist als der Abstand der zweiten Art an Durchlässen (40) mit reduzierter freier Querschnittsfläche, die an gegenüberliegenden Endbereichen des Ventilgehäuses (10) angeordnet sind.

9. Ventil nach einem der Ansprüche 1 bis 8, **dadurch gekennzeichnet, dass** im Ventilgehäuse (10) eine weitere Durchlaßstelle (24) mit vergrößerter Querschnittsfläche als Nutzanschluß vorhanden ist und dass die sonstigen Durchlässe (18,40,48) die Pump- und Tankanschlüsse (P,T) bilden, zwischen denen der Nutzanschluß (A) angeordnet ist.

10. Ventil nach einem der Ansprüche 1 bis 9, **dadurch gekennzeichnet, dass** der Ventilkolben (12) mittels eines Betätigungsmagneten (42), insbesondere Proportionalmagneten, betätigbar ist und dass der Ventilkolben (12) sich an mindestens einem Federspeicher, insbesondere in Form einer Druckfeder (46) abstützt.
